# EUROPEAN PATENT SPECIFICATION

(11) **EP 3 752 779 B1**
(45) Date of publication and mention of the grant of the patent: **03.11.2021**
(21) Application number: 19705393.7
(22) Date of filing: 25.01.2019
(51) Int. Cl.: F27B 3/19, F27D 1/18, F27D 3/15

(54) **COOLED SILL DEVICE FOR SLAG DOOR OF A METALLURGICAL FURNACE**
GEKÜHLTE SCHWELLENVORRICHTUNG FÜR DIE SCHLACKENTÜR EINES METALLURGISCHEN OFENS
DISPOSITIF DE SEUIL REFROIDI POUR PORTE DE DÉCRASSAGE D'UN FOUR MÉTALLURGIQUE

(30) Priority: 16.02.2018 IT 201800002758
(43) Date of publication of application: 23.12.2020
(73) Proprietor: MIWENTI S.R.L., 24062 Costa Volpino (BG) (IT)
(72) Inventor: BIANCHI, Renato, 24060 Sovere, Bergamo (IT)
(74) Representative: De Lorenzo, Danilo
(86) International application number: PCT/IB2019/050630
(87) International publication number: WO 2019/159023

(56) References cited:
- DE-A1- 2 723 568
- DE-A1- 3 842 203
- US-A- 2 347 792

## Description

The present invention is generally included in the field of melting metals.

More specifically, the present invention relates to a sill device suitable for fluid cooling and intended to be placed in the vicinity of the door of a metallurgical furnace, also known as a "slag door".

In the steel industry, it is known to melt metals in melting furnaces, such as electric arc furnaces (EAFs), which produce steel using an electric arc to melt scrap metal, hot metal, iron-based materials or other metal materials placed inside the furnace.

In the melting stage, the electric arc and burners melt the metal load into a molten metal pool. Typically, the melting process also includes a refining and/or decarburization stage. In this stage, the metal continues to be heated by the arc until, according to techniques known in the art, slag emerges on the surface.

Thus, before the melted material is poured out of the furnace, it is necessary to remove the slag and impurities from the surface of the melted material. It may also be desirable to take samples from the molten material to check, among other things, the chemistry of the melting, carbon and oxygen levels and the temperature. Conventionally, this is done through a slag port or door located in the side wall of the furnace.

A threshold or sill (or, conventionally called "electrode" in the technical jargon of the sector) as described in US 2 347 792 A, DE 27 23 568 A1 and DE 38 42 203 A1, is generally placed below and adjacent to the slag port of the metallurgical furnace with the function of accompanying the emergence of the slag and protecting the edge of the mouth of the furnace. Such a threshold or sill is generally made up of a single block of graphite or comprises a graphite electrode piece previously used for melting and now damaged or broken, suitable to withstand the high temperatures that the slag and/or molten metal develop while pouring out of the furnace.

This traditional solution has its drawbacks. The electrode or block of graphite is subject to rapid deterioration due to the aggressive nature of the molten slag and therefore needs to be replaced with considerable frequency depending on the operating levels of the furnace.

This means that one needs to have a supply of graphite blocks or graphite electrodes in stock, as well as be forced to make the system inactive during the replacement.

In order to overcome the aforesaid drawbacks, it is known to provide a sill made of copper or alloys thereof comprising therein the means of liquid cooling, which allow for an improved lifespan compared to the sill made of graphite.

However, the aforesaid copper sills also show wear over time and require replacement.

The aforesaid copper sills, while having many advantages over graphite sills, may therefore be improved in terms of durability over time.

The purpose of the present invention is to solve the aforesaid drawbacks of the known slag door sills and, in particular, to create a sill device for a slag door of a metallurgical furnace with improved features of durability over time.

According to the invention, such objects are achieved by a sill device for a slag door of a metallurgical furnace and a metallurgical furnace according to the accompanying independent claims. Preferred embodiments of the invention are defined in the dependent claims.

The features and advantages of the sill device for a slag door of a metallurgical furnace and the metallurgical furnace will be apparent from the description given below by way of non-limiting example, according to the accompanying figures, wherein:

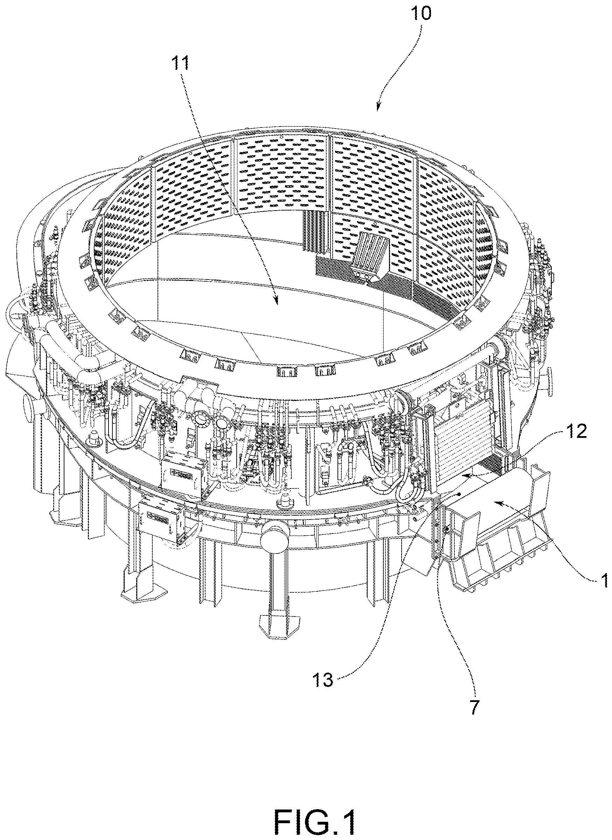

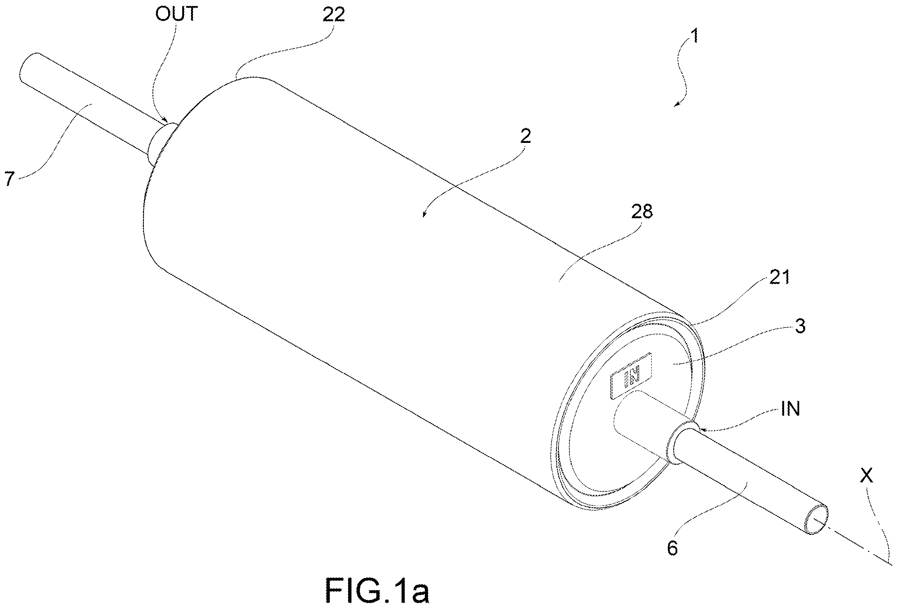

- figure 1 shows a perspective view of a sill device according to an embodiment of the present invention installed in the vicinity of a slag door of a metallurgical furnace;
- figure 1a shows a perspective view of a sill device according to an embodiment of the present invention;

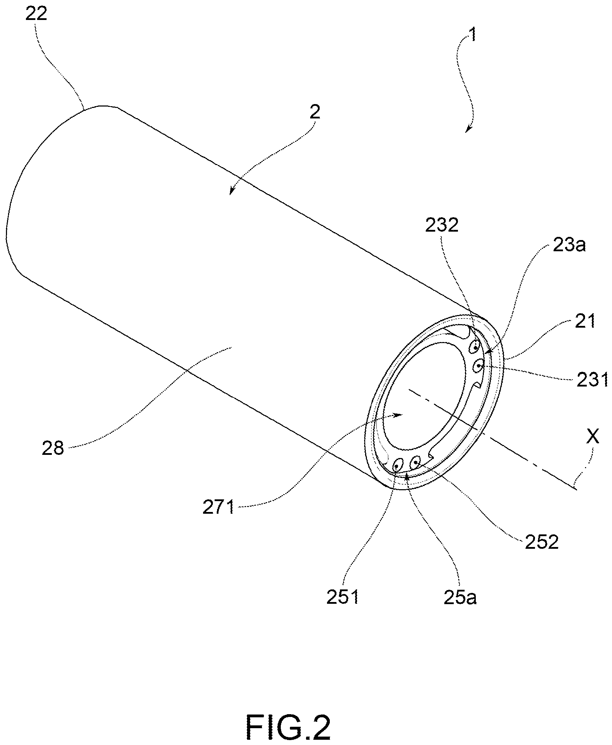

- figure 2 shows a perspective view of a sill device wherein the entrance closing plate has been removed, according to an embodiment of the present invention;

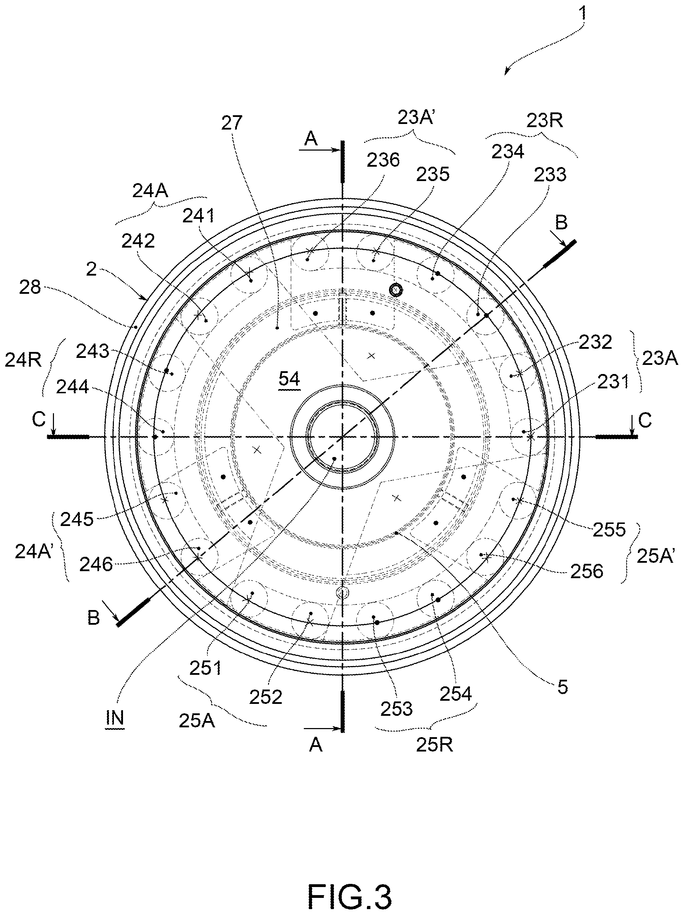

- figure 3 shows a plan view of a sill device according to an embodiment of the present invention, according to a view perpendicular to the longitudinal axis X of the device;
- figure 4 shows a cross-sectional view of the sill device according to the present invention, along the sectional plane A-A in figure 3;
- figure 5 shows a cross-sectional view of the sill device according to the present invention, along the sectional plane B-B in figure 3;
- figure 6 shows a cross-sectional view of the sill device according to the present invention, along the sectional plane C-C in figure 3;
- figure 7 shows a cross-sectional view of the sill device according to the present invention, along the sectional plane D-D in figure 4;
- figure 8 shows a cross-sectional view of the sill device according to the present invention, along the sectional plane E-E in figure 4;
- figure 9 shows a cross-sectional view of the sill device according to the present invention, along the sectional plane F-F in figure 4;
- figure 10 shows a cross-sectional view of the sill device according to the present invention, along the sectional plane G-G in figure 4;
- figure 11 shows a cross-sectional view of the sill device according to the present invention, along the sectional plane H-H in figure 4;
- figure 12 shows a cross-sectional view of the sill device according to the present invention, along the sectional plane I-I in figure 4;
- figure 13 shows a sectioned perspective view of the sill device according to the present invention, along a first sectional plane;
- figure 14 shows a sectioned perspective view of the sill device according to the present invention, along a second sectional plane;
- figure 15 shows a sectioned perspective view of the sill device according to the present invention, along a third sectional plane;
- figure 16 shows a sectioned perspective view of the sill device according to the present invention, along a fourth sectional plane;
- figure 16a shows a sectioned perspective view of the sill device according to the present invention, along a fifth sectional plane;

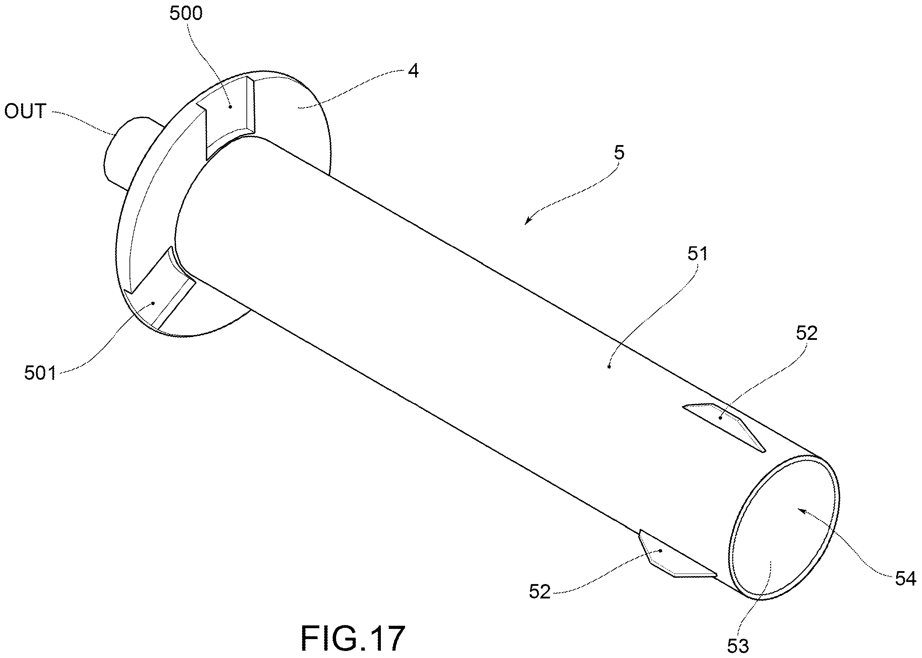

- figure 17 shows a perspective view of a tubular insert of the sill device according to an embodiment according to the present invention;
   According to the accompanying figures, a sill device 1 for a slag port of a metallurgical furnace is indicated collectively at 1.

The sill device 1 is suitable to be applied to a metallurgical furnace 10 with a melting basin 11 which may be accessed from a slag door 12. In particular, the sill device 1 is applicable in the vicinity of the threshold 13 of the slag door and preferably below the slag door.

The sill device 1 is suitable to be cooled by a cooling fluid and comprises a base body 2 made of metal, preferably copper or a copper alloy, which mainly extends around a longitudinal axis X from an inlet end 21 to an outlet end 22. The base body 2 is preferably made by forging, but may also be made by casting.

The base body 2 is therefore suitable to come into contact with the high-temperature hot slag coming out of the metallurgical furnace through the slag door.

The base body 2 comprises a cooling fluid inlet port IN in the vicinity of the inlet end 21 and one in the vicinity of the outlet end 22. A hydraulic cooling circuit is connected to the cooling fluid inlet port IN and to the cooling fluid outlet port OUT, for example via delivery and return tubes for the cooling fluid, preferably water.

The base body 2 comprises a collection cavity 27 around which there extends a base body wall 28 which at least partially defines the collection cavity 27. Such collection cavity 27 is in fluid communication with the treatment fluid outlet port.

Moreover, the base body 2 comprises cooling ducts 23A, 23A', 24A, 24A', 25A, 25A', 23R, 24R, 25R made in the base body wall 28 and in fluid communication with the cooling fluid inlet port IN and with the inner cavity 27.

According to an embodiment in accordance with the invention, the cooling ducts comprise delivery ducts 23A, 23A', 24A, 24A', 25A, 25A' and return ducts 23R, 24R, 25R which extend mainly parallel to and around the longitudinal axis X. Such ducts are suitable for the passage of the cooling fluid in such a way that the cooling fluid passes through the delivery ducts 23A, 23A', 24A, 24A', 25A, 25A' in the direction opposite to the flow direction in the return ducts 23R, 24R, 25R. The delivery 23A, 23A', 24A, 24A', 25A, 25A' and return 23R, 24R, 25R ducts are in fluid communication with each other.

Preferably, the base body is axially-symmetrical around the longitudinal axis X and the base body wall 28 develops coaxially and around the longitudinal axis X. The hot slag coming from the metallurgical furnace flows on the base body wall 28.

Even more preferably, the base body is cylindrical in shape, so as to facilitate the sliding of the slag and at the same time allowing the hot slag to come into contact with a different surface of the base body 2 as a result of a rotation thereof.

In an embodiment according to the invention, the collection cavity 27 is a through-hole in the base body 2 from the inlet end 21 to the outlet end 22. An inlet closing plate 3 sealingly closes the collection cavity 27 at a cavity opening 271 thereof toward the inlet end 21.

Preferably, the cooling ducts 23A, 23A', 24A, 24A', 25A, 25A', 23R, 24R, 25R are spaced annularly around the longitudinal axis X and around the collection cavity 27.

In an embodiment according to the invention, the cooling ducts 23A, 23A', 24A, 24A', 25A, 25A', 23R, 24R, 25R are disposed around the longitudinal axis X along the directrices of a virtual cylinder having cylinder axis coinciding with the longitudinal axis X. This efficiently increases the cooling of the outer surface of the device 1.

Preferably, some 23A, 24A, 25A of the delivery ducts 23A, 23A', 24A, 24A', 25A, 25A' are primary delivery ducts 23A, 24A, 25A suitable to receive the cooling fluid from the treatment fluid inlet port IN first.

In particular, the primary delivery ducts 23A, 24A, 25A, comprise pairs of primary ducts 231,232; 241,242; 251,252; wherein each of said pairs 231,232; 241,242; 251,252; is annularly spaced relative to the adjacent pair, preferably by an angle of about 120°.

Preferably, some 23A', 24A', 25A' of the delivery ducts 23A, 23A', 24A, 24A', 25A, 25A' are secondary delivery ducts 23A', 24A', 25A' suitable to receive the cooling fluid coming from the return ducts 23R, 24R, 25R through a second connection cavity 400, 401, 402 disposed in the vicinity of the inlet end 21.

In particular, the secondary delivery ducts 23A', 24A', 25A', comprise pairs of secondary ducts 235,236; 245,246; 255,256; wherein each of said pairs of secondary ducts 235,236; 245,246; 255,256; is annularly spaced with respect to the adjacent pair, preferably by an angle of about 120°.

Preferably, return channels 23R, 24R, 25R, comprise return duct pairs 233,234; 243,244; 253,254; wherein each of these return duct pairs 233,234; 243,244; 253,254; is annularly spaced from the adjacent pair, preferably by an angle of about 120°.

In other words, the delivery and return channels are disposed annularly in an alternating way in an ordinate delivery-return sequence, until an entire ring is completed.

The fluid flowing in the primary delivery ducts 23A, 24A, 25A coming from the inlet end 21 arrives in the vicinity of the outlet end 22 and passes through a first connection cavity 300, 301, 302 into the return ducts 23R, 24R, 25R until it again reaches the inlet end 21. In the vicinity of the inlet end 21, the treatment fluid passes through a second connection cavity 400, 401, 402 into the secondary delivery ducts 23A', 24A', 25A', through which it again reaches the outlet end 22. At this point, in the vicinity of the outlet end 22, the treatment fluid flows into the collection cavity 27 through a connection window 500, 501, 502. From the collection cavity 27, the cooling liquid is channeled to the treatment fluid outlet port OUT.

Preferably, the closing plate inlet 3 comprises a plate chamber 31 extending mainly in the radial direction Y perpendicular to the longitudinal direction X in fluid communication with the treatment fluid inlet port IN and which flows directly only into the primary delivery ducts 23A, 24A, 25A.

According to an embodiment, a tubular insert 5 enclosing a tubular chamber 54 is housed in the collection cavity 27. Such tubular insert 5 is disposed at a distance relative to the side wall of the collection cavity 272 which defines the collection cavity 27 parallel to the longitudinal direction X.

Preferably, the tubular insert 5 comprises a tubular extending wall 51 which extends mainly along the longitudinal direction X and which defines the tubular chamber 54. From the tubular extending wall 51 centering protuberances protrude 52 suitable to abut with the collection cavity side wall 272 to keep the tubular element 5 spaced from such collection cavity side wall 272.

Preferably, the tubular insert 5 extends for a length along the longitudinal direction X less than the length of the collection cavity 27 along the same longitudinal direction X, so that a right-hand fluid inlet opening 53 thereof is spaced apart from the inlet closing plate 3.

According to an embodiment in accordance with the invention, an outlet closing plate 4 sealingly closes the collection cavity 27 at a second cavity opening 272 thereof towards the outlet end 22 to prevent the leakage of cooling fluid in the vicinity of the base body wall 28.

Preferably, the outlet closing plate 4 comprises a through-hole 41 that flows directly into the tubular chamber 54 and is suitable to place the tubular chamber 54 and the cooling fluid outlet port OUT in fluid communication.

Preferably, the outlet closing plate 4 sealingly closes a left-hand opening 55 of the tubular element 5 so as to allow the passage of cooling fluid from the tubular chamber 54 toward the cooling fluid outlet port OUT only through the through-hole 41.

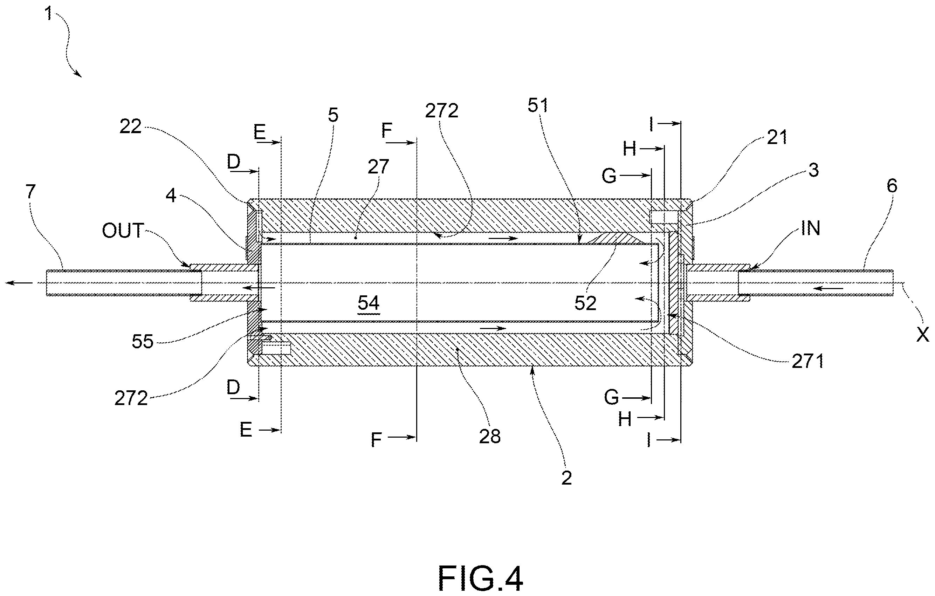

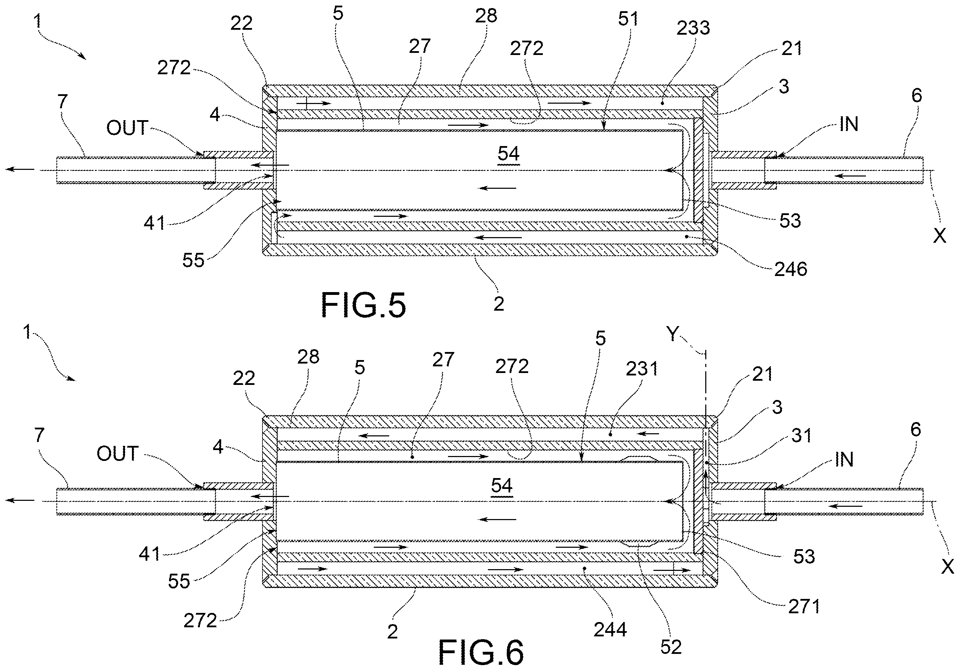

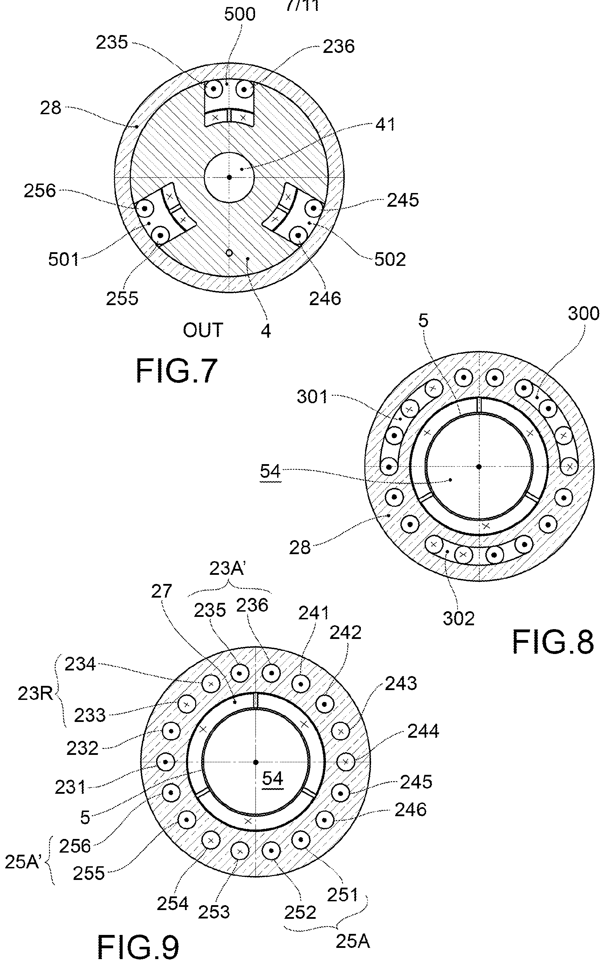

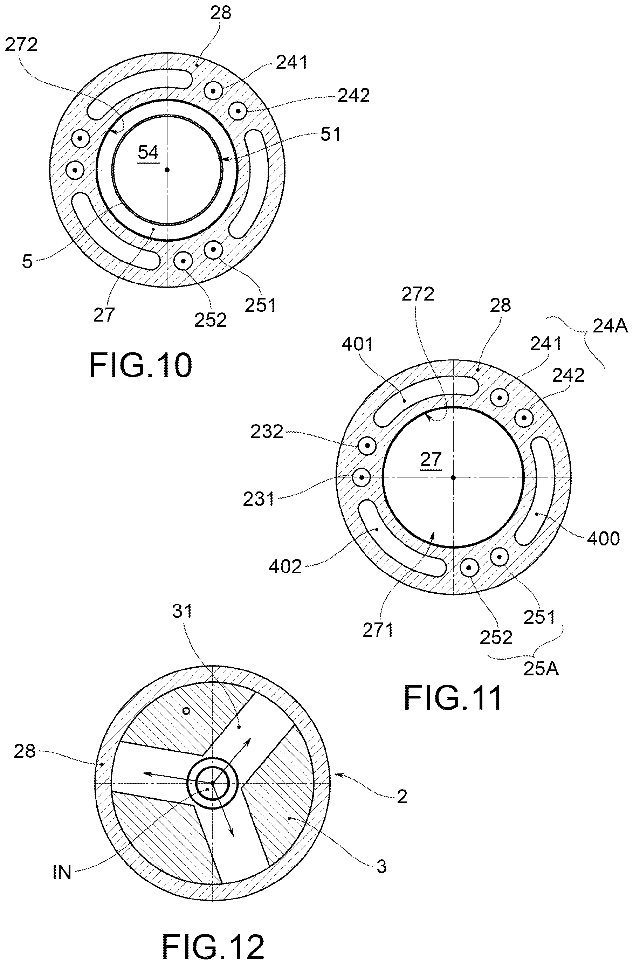

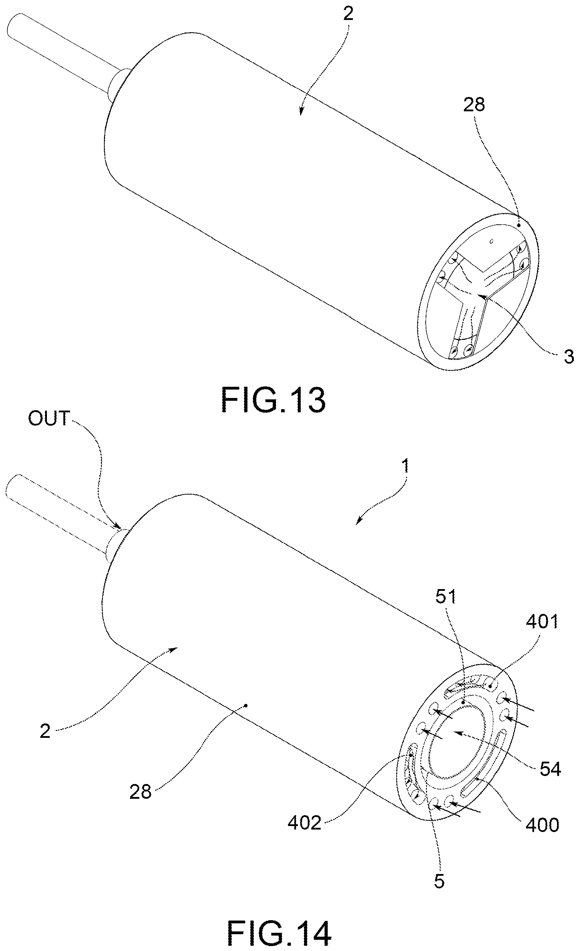

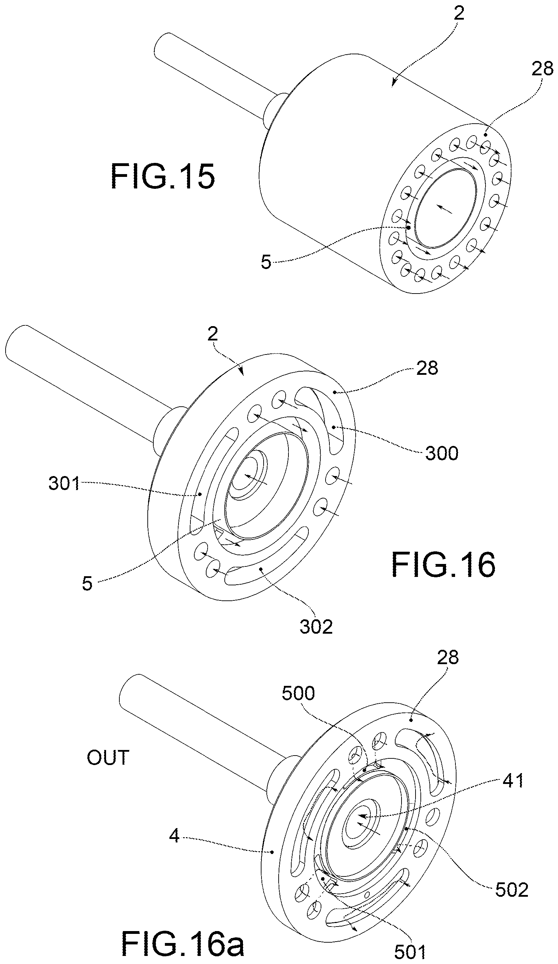

With reference to figures 7 to 12, it is possible to understand the path of the cooling fluid inside the device. In these figures, the direction of the cooling fluid entering the plane of the sheet is indicated with an "x", while the direction of the treatment fluid leaving the plane of the sheet is indicated with a dot. Moreover, the same path as the treatment fluid is indicated with the arrows in figures 4 to 6 and 13 to 16A.

From the treatment fluid inlet port IN, the cooling fluid is channeled through the plate chamber 31 into the pairs of primary delivery ducts 231,232; 241,242; 251,252; until it reaches the outlet end 22. The treatment fluid, through the first connection cavity 300, 301, 302, obtained in the base body 2 in the vicinity of the outlet end 22 and sealed by the outlet closing plate 4, passes through the pairs of return ducts 233,234; 243,244; 253,254; until it again reaches the inlet end 21. Near the inlet end 21, the treatment fluid, through the second connection cavity 400, 401, 402, obtained in the base body 2 in the vicinity of the inlet end 21 and sealed by the inlet closing plate 3, passes into the pairs of secondary delivery ducts 235,236; 245,246; 255,256; through which it reaches the outlet end 22 again. At this point, in the vicinity of the outlet end 22, the treatment fluid flows into the collection cavity 27 through a connection window 500, 501, 502 obtained in the outlet closing plate 4. From the collection cavity 27, the cooling liquid is channeled to the treatment fluid outlet port OUT. In particular, the treatment fluid flows into the collection chamber 27 in the return direction in a sliding gap defined between the collection cavity side wall and the tubular extending wall 51. From such gap, the cooling fluid arrives in the vicinity of the inlet closing plate 3 and enters the tubular chamber 54 to travel therein in the delivery direction until it reaches the treatment fluid outlet port OUT.

Innovatively, the sill device according to the present invention, due to the system of ducts on the base wall of the base body that flow into a collection cavity, allows an improved cooling of the walls of the base body of the device, allowing a longer life of the same device.

In addition, the treatment fluid advantageously runs along the wall of the base body in opposite directions in the respective ducts (delivery and return), ensuring a homogeneous distribution of the coolant and improved durability of the device.

Furthermore, the axial-symmetrical shape of the sill device according to the present invention, and in particular the cylindrical shape, allows the device to be repositioned, rotating it around its longitudinal axis X, so that the hot slag coming out of the furnace may come into contact with an area different from the previous position. This allows a contact area between the device and the slag to be maintained with a geometry substantially constant during the life of the device. In addition, this makes it possible to use the entire surface of the wall of the base body before having to replace the sill device completely, thus ensuring a longer life of the device.

In addition, the homogeneous and annular arrangement of the ducts in the wall of the base body allows the heat exchange to be improved and a longer life and resistance of the device to be ensured.

Further, the device according to the present invention, may be produced by forging, with production costs significantly reduced relative to the costs of the devices of the prior art.

Production by means of forging is made easier due to the presence of the inlet and outlet closing plates, welded tightly to the base body 2.

It is clear that a person skilled in the art, in order to satisfy contingent and specific needs, may make changes to the invention described above, all of which are, however, contained within the scope of protection as defined by the following claims.

## Claims

1. Sill device (1) for a slag door of a metallurgical furnace, suitable to be cooled by a cooling fluid, said sill device (1) comprising
- a metal base body (2), preferably made of copper or a copper alloy, which extends mainly around a longitudinal axis (X) from an inlet end (21) to an outlet end (22);
- a cooling fluid inlet port (IN) in the vicinity of the inlet end (21) and a cooling fluid outlet port (OUT) in the vicinity of the outlet end (22);
wherein said base body (2) comprises a collection cavity (27) around which a base body wall (28) extends which at least partially defines the collection cavity (27), said collection cavity (27) being in fluid communication with the treatment fluid outlet port;
and wherein said base body (2) comprises cooling ducts (23A, 23A', 24A, 24A', 25A, 25A', 23R, 24R, 25R) made in the base body wall (28) and in fluid communication with the cooling fluid inlet port (IN) and with the collection cavity (27).

2. Sill device (1), according to claim 1, wherein the cooling ducts comprise delivery ducts (23A, 23A', 24A, 24A', 25A, 25A') and return ducts (23R, 24R, 25R) which extend mainly parallel to and around the longitudinal axis (X), said ducts being suitable for the passage of the cooling fluid in such a way that the cooling fluid passes through the delivery ducts (23A, 23A', 24A, 24A', 25A, 25A') in the direction opposite to the flow direction in the return ducts (23R, 24R, 25R), said delivery (23A, 23A', 24A, 24A', 25A, 25A') and return (23R, 24R, 25R) ducts being in fluid communication with each other.

3. Sill device (1) according to claim 1 or 2, wherein the base body is symmetrically axial in shape around the longitudinal axis (X) and wherein the base body wall (28) extends coaxially to and around the longitudinal axis (X).

4. Sill device (1) according to claim 3, wherein the base body is cylindrical in shape.

5. Sill device (1) according to any one of the preceding claims, wherein the collection cavity (27) is a through-hole in the base body (2) from the inlet end (21) to the outlet end (22) and wherein the inlet closing plate (3) sealingly closes the collection cavity (27) at a recess opening (271) thereof toward the inlet end (21).

6. Sill device (1) according to any one of the preceding claims, wherein the cooling ducts (23A, 23A', 24A, 24A', 25A, 25A', 23R, 24R, 25R) are spaced annularly around the longitudinal axis (X) and around the collection cavity (27).

7. Sill device (1) according to claim 6, wherein the cooling ducts (23A, 23A', 24A, 24A', 25A, 25A', 23R, 24R, 25R) are arranged around the longitudinal axis (X) along the directrices of a virtual cylinder having a cylinder axis coinciding with the longitudinal axis (X).

8. Sill device (1) according to any one of claims 2 to 7, wherein some (23A, 24A, 25A) of the delivery ducts (23A, 23A', 24A, 24A', 25A, 25A') are primary delivery ducts (23A, 24A, 25A) suitable to receive first the cooling fluid from the treatment fluid inlet port (IN) and wherein the inlet closing plate (3) comprises a plate chamber (31) extending mainly in the radial direction (Y) perpendicular to the longitudinal direction (X) in fluid communication with the treatment fluid inlet port (IN) and which flows directly into the primary delivery ducts (23A, 24A, 25A).

9. Sill device (1) according to any one of the preceding claims, wherein a tubular insert (5) is housed in the collection cavity (27) which encloses a tubular chamber (54), said tubular insert (5) being arranged spaced apart from the side wall of the collection cavity (272) which defines the collection cavity (27) parallel to the longitudinal direction (X) .

10. Sill device (1) according to claim 9, wherein the tubular insert (5) comprises a tubular extending wall (51) which extends mainly along the longitudinal direction (X) and which defines the tubular chamber (54), centering protuberances (52) protruding from the tubular extending wall (51) suitable to abut with the collection cavity side wall (272) to keep the tubular element (5) spaced from said collection cavity side wall (272).

11. Sill device (1) according to claim 9 or 10, wherein the tubular insert (5) extends for a length along the longitudinal direction (X) less than the length of the collection cavity (27) along the same longitudinal direction (X), so that a right-hand fluid inlet opening (53) thereof is spaced apart from the inlet closing plate (3).

12. Sill device (1) according to any one of the preceding claims, comprising an outlet closing plate (4) that closes the collection cavity (27) at a second recess opening (272) thereof toward the outlet end (21) to prevent cooling fluid from escaping in the vicinity of the base body wall (28).

13. Sill device (1) according to any one of claims 9 to 11 and claim 12, wherein the outlet closing plate (28) comprises a through-hole (41) which flows directly into the tubular chamber (54) and is suitable to place said tubular chamber (54) in fluid communication with the cooling fluid outlet port (OUT).

14. Sill device (1) according to claim 13, wherein the outlet closing plate (4) sealingly closes a left-hand opening (55) of the tubular element (5) so as to allow the passage of cooling fluid from the tubular chamber (54) toward the cooling fluid outlet port (OUT) only through the through-hole (41) .

## Patentansprüche

1. Schwellenvorrichtung (1) für eine Schlackentür eines metallurgischen Ofens, die dazu geeignet ist, von einem Kühlfluid gekühlt zu werden, wobei die Schwellenvorrichtung (1) umfasst
- einen Metall-Grund-Körper (2), vorzugsweise hergestellt aus Kupfer oder einer Kupferlegierung, welcher sich hauptsächlich um eine longitudinale Achse (X) von einem Einlassende (21) zu einem Auslassende (22) erstreckt;
- einen Kühl-Fluid-Einlass-Anschluss (IN) in der Nähe des Einlassendes (21) und einen Kühl-Fluid-Auslass-Anschluss (OUT) in der Nähe des Auslassendes (22);
wobei der Grundkörper (2) einen Sammelhohlraum (27) umfasst, um welchen sich eine Grundkörperwand (28) erstreckt, welche wenigstens teilweise den Sammelhohlraum (27) definiert, wobei der Sammelhohlraum (27) in Fluidverbindung mit dem Behandlungs-Fluid-Auslass-Anschluss ist;
und wobei der Grundkörper (2) Kühlkanäle (23A, 23A', 24A, 24A', 25A, 25A', 23R, 24R, 25R) umfasst, die in der Grundkörperwand (28) hergestellt sind und in Fluidverbindung mit dem Kühl-Fluid-Einlass-Anschluss (IN) und mit dem Sammelhohlraum (27) sind.

2. Schwellenvorrichtung (1) nach Anspruch 1, wobei die Kühlkanäle Zuführkanäle (23A, 23A', 24A, 24A', 25A, 25A') und Rücklaufkanäle (23R, 24R, 25R), welche sich hauptsächlich parallel zu und um die longitudinale Achse (X) erstrecken, umfassen, wobei die Kanäle für den Durchgang des Kühlfluids in derartiger Weise geeignet sind, dass das Kühlfluid durch die Zuführkanäle (23A, 23A', 24A, 24A', 25A, 25A'), in der Richtung entgegengesetzt zu der Flussrichtung in den Rücklaufkanälen (23R, 24R, 25R) durchgeht, wobei die Zuführ-(23A, 23A', 24A, 24A', 25A, 25A') und Rücklauf- (23R, 24R, 25R) kanäle in Fluidverbindung miteinander stehen.

3. Schwellenvorrichtung (1) nach Anspruch 1 oder 2, wobei der Grundkörper axialsymmetrisch um die longitudinale Achse (X) geformt ist und wobei sich die Grundkörperwand (28) koaxial zu und um die longitudinale Achse (X) erstreckt.

4. Schwellenvorrichtung (1) nach Anspruch 3, wobei der Grundkörper zylindrisch geformt ist.

5. Schwellenvorrichtung (1) nach einem der vorhergehenden Ansprüche, wobei der Sammelhohlraum (27) ein Durchgangsloch in dem Grundkörper (2) von dem Einlassende (21) zu dem Auslassende (22) ist und wobei die Einlassverschlussplatte (3) den Sammelhohlraum (27) an einer Vertiefungsöffnung (271) davon zum Einlassende (21) hin abdichten verschließt.

6. Schwellenvorrichtung (1) nach einem der vorhergehenden Ansprüche, wobei die Kühlkanäle (23A, 23A', 24A, 24A', 25A, 25A', 23R, 24R, 25R) ringförmig um die longitudinale Achse (X) und um den Sammelhohlraum (27) beabstandet sind.

7. Schwellenvorrichtung (1) nach Anspruch 6, wobei die Kühlkanäle (23A, 23A', 24A, 24A', 25A, 25A', 23R, 24R, 25R) um die longitudinale Achse (X) entlang der Mantellinien eines virtuellen Zylinders mit einer Zylinderachse, die mit der longitudinalen Achse (X) übereinstimmt, angeordnet sind.

8. Schwellenvorrichtung (1) nach einem der Ansprüche 2 bis 7, wobei einige (23A, 24A, 25A) der Zuführkanäle (23A, 23A', 24A, 24A', 25A, 25A') primäre Zuführkanäle (23A, 24A, 25A) sind, die geeignet sind, erst das Kühlfluid von dem Behandlungs-Fluid-Einlass-Anschluss (IN) zu erhalten und wobei die Einlassverschlussplatte (3) eine Plattenkammer (31) umfasst, die sich hauptsächlich in der radialen Richtung (Y) orthogonal zu der longitudinalen Richtung (X) in Fluidverbindung mit dem Behandlungs-Fluid-Einlass-Anschluss (IN) erstreckt und welche direkt in die primären Zuführkanäle (23A, 24A, 25A) mündet.

9. Schwellenvorrichtung (1) nach einem der vorhergehenden Ansprüche, wobei ein rohrförmiger Einsatz (5) in dem Sammelhohlraum (27) untergebracht ist, welcher eine rohrförmige Kammer (54) umschließt, wobei der rohrförmige Einsatz (5) von der Seitenwand des Sammelhohlraums (272), welche den Sammelhohlraum (27) parallel zu der longitudinalen Richtung (X) definiert, beabstandet angeordnet ist.

10. Schwellenvorrichtung (1) nach Anspruch 9, wobei der rohrförmige Einsatz (5) eine sich rohrförmig erstreckende Wand (51) umfasst, die sich hauptsächlich entlang der longitudinalen Richtung (X) erstreckt und welche die rohrförmige Kammer (54) definiert, die von der sich rohrförmig erstreckenden Wand (51) hervorstehenden Zentriervorsprünge (52) zentriert, die dazu geeignet sind, an der Sammel-Hohlraum-Seiten-Wand (272) anzuliegen, um das rohrförmige Element (5) von der Sammel-Hohlraum-Seiten-Wand (272) beabstandet zu halten.

11. Schwellenvorrichtung (1) nach Anspruch 9 oder 10, wobei sich der rohrförmige Einsatz (5) für eine Länge entlang der longitudinalen Richtung (X), die geringer ist, als die Länge des Sammelhohlraums (27) entlang derselben longitudinalen Richtung (X), erstreckt, so dass eine rechte Fluid-Einlass-Öffnung (53) davon von der Einlassverschlussplatte (3) beabstandet ist.

12. Schwellenvorrichtung (1) nach einem der vorhergehenden Ansprüche, umfassend eine Auslassverschlussplatte (4), welche den Sammelhohlraum (27) an einer zweiten Vertiefungsöffnung (272) davon zum Auslassende (21) hin verschließt, um das Fluid daran zu hindern, in der Nähe der Grundkörperwand (28) zu entweichen.

13. Schwellenvorrichtung (1) nach einem der Ansprüche 9 bis 11 und Anspruch 12, wobei die Auslassverschlussplatte (28) ein Durchgangsloch (41) umfasst, welches direkt in die rohrförmige Kammer (54) mündet und geeignet ist, die rohrförmige Kammer (54) in Fluidverbindung mit dem Kühl-Fluid-Auslass-Anschluss (OUT) zu bringen.

14. Schwellenvorrichtung (1) nach Anspruch 13, wobei die Auslassverschlussplatte (4) eine linke Öffnung (55) des rohrförmigen Elements (5) verschließt, um den Durchgang von Kühlfluid von der rohrförmigen Kammer (54) in Richtung des Kühl-Fluid-Auslass-Anschlusses (OUT) nur durch das Durchgangsloch (41) zu erlauben.

## Revendications

1. Dispositif de seuil (1) pour une porte de décrassage d'un four métallurgique, approprié pour être refroidi par un fluide de refroidissement, ledit dispositif de seuil (1) comprenant
- un corps de base (2) en métal, constitué de préférence de cuivre ou d'un alliage de cuivre, qui s'étend principalement autour d'un axe longitudinal (X) d'une extrémité d'entrée (21) à une extrémité de sortie (22) ;
- un orifice d'entrée de fluide de refroidissement (IN) au voisinage de l'extrémité d'entrée (21) et un orifice de sortie de fluide de refroidissement (OUT) au voisinage de l'extrémité de sortie (22) ;
dans lequel ledit corps de base (2) comprend une cavité de collecte (27) autour de laquelle s'étend une paroi de corps de base (28) qui définit au moins partiellement la cavité de collecte (27), ladite cavité de collecte (27) étant en communication fluidique avec l'orifice de sortie de fluide de traitement ;
et dans lequel ledit corps de base (2) comprend des conduits de refroidissement (23A, 23A', 24A, 24A', 25A, 25A', 23R, 24R, 25R) ménagés dans la paroi de corps de base (28) et en communication fluidique avec l'orifice d'entrée de fluide de refroidissement (IN) et avec la cavité de collecte (27).

2. Dispositif de seuil (1), selon la revendication 1, dans lequel les conduits de refroidissement comprennent des conduits d'approvisionnement (23A, 23A', 24A, 24A', 25A, 25A') et des conduits de retour (23R, 24R, 25R) qui s'étendent principalement parallèlement à l'axe longitudinal (X) et autour de celui-ci, lesdits conduits étant appropriés pour le passage du fluide de refroidissement de telle sorte que le fluide de refroidissement passe à travers les conduits d'approvisionnement (23A, 23A', 24A, 24A', 25A, 25A') dans la direction opposée à la direction d'écoulement dans les conduits de retour (23R, 24R, 25R), lesdits conduits d'approvisionnement (23A, 23A', 24A, 24A', 25A, 25A') et de retour (23R, 24R, 25R) étant en communication fluidique les uns avec les autres.

3. Dispositif de seuil (1) selon la revendication 1 ou 2, dans lequel le corps de base est de forme symétriquement axiale autour de l'axe longitudinal (X) et dans lequel la paroi de corps de base (28) s'étend coaxialement à l'axe longitudinal (X) et autour de celui-ci.

4. Dispositif de seuil (1) selon la revendication 3, dans lequel le corps de base est de forme cylindrique.

5. Dispositif de seuil (1) selon l'une quelconque des revendications précédentes, dans lequel la cavité de collecte (27) est un trou traversant dans le corps de base (2) de l'extrémité d'entrée (21) à l'extrémité de sortie (22) et dans lequel la plaque de fermeture d'entrée (3) ferme de manière étanche la cavité de collecte (27) au niveau d'une ouverture d'évidement (271) de celle-ci vers l'extrémité d'entrée (21).

6. Dispositif de seuil (1) selon l'une quelconque des revendications précédentes, dans lequel les conduits de refroidissement (23A, 23A', 24A, 24A', 25A, 25A', 23R, 24R, 25R) sont espacés de manière annulaire autour de l'axe longitudinal (X) et autour de la cavité de collecte (27).

7. Dispositif de seuil (1) selon la revendication 6, dans lequel les conduits de refroidissement (23A, 23A', 24A, 24A', 25A, 25A', 23R, 24R, 25R) sont agencés autour de l'axe longitudinal (X) suivant les directrices d'un cylindre virtuel ayant un axe de cylindre coïncidant avec l'axe longitudinal (X).

8. Dispositif de seuil (1) selon l'une quelconque des revendications 2 à 7, dans lequel certains (23A, 24A, 25A) des conduits d'approvisionnement (23A, 23A', 24A, 24A', 25A, 25A') sont des conduits d'approvisionnement primaires (23A, 24A, 25A,) appropriés pour recevoir en premier le fluide de refroidissement depuis l'orifice d'entrée de fluide de traitement (IN) et dans lequel la plaque de fermeture d'entrée (3) comprend une chambre de plaque (31) s'étendant principalement dans la direction radiale (Y) perpendiculaire à la direction longitudinale (X) en communication fluidique avec l'orifice d'entrée de fluide de traitement (IN) et qui donne directement dans les conduits d'approvisionnement primaires (23A, 24A, 25A).

9. Dispositif de seuil (1) selon l'une quelconque des revendications précédentes, dans lequel un insert tubulaire (5) est logé dans la cavité de collecte (27) qui renferme une chambre tubulaire (54), ledit insert tubulaire (5) étant agencé espacé de la paroi latérale de la cavité de collecte (272) qui définit la cavité de collecte (27) parallèlement à la direction longitudinale (X).

10. Dispositif de seuil (1) selon la revendication 9, dans lequel l'insert tubulaire (5) comprend une paroi d'extension tubulaire (51) qui s'étend principalement suivant la direction longitudinale (X) et qui définit la chambre tubulaire (54), des protubérances de centrage (52) faisant saillie depuis la paroi d'extension tubulaire (51) appropriées pour venir en butée avec la paroi latérale de cavité de collecte (272) pour maintenir l'élément tubulaire (5) espacé de ladite paroi latérale de cavité de collecte (272).

11. Dispositif de seuil (1) selon la revendication 9 ou 10, dans lequel l'insert tubulaire (5) s'étend sur une longueur suivant la direction longitudinale (X) inférieure à la longueur de la cavité de collecte (27) suivant la même direction longitudinale (X), de sorte qu'une ouverture d'entrée de fluide à droite (53) de celle-ci soit espacée de la plaque de fermeture d'entrée (3).

12. Dispositif de seuil (1) selon l'une quelconque des revendications précédentes, comprenant une plaque de fermeture de sortie (4) qui ferme la cavité de collecte (27) au niveau d'une seconde ouverture d'évidement (272) de celle-ci vers l'extrémité de sortie (21) pour empêcher le fluide de refroidissement de s'échapper au voisinage de la paroi de corps de base (28).

13. Dispositif de seuil (1) selon l'une quelconque des revendications 9 à 11 et la revendication 12, dans lequel la plaque de fermeture de sortie (28) comprend un trou traversant (41) qui donne directement dans la chambre tubulaire (54) et est approprié pour placer ladite chambre tubulaire (54) en communication fluidique avec l'orifice de sortie de fluide de refroidissement (OUT).

14. Dispositif de seuil (1) selon la revendication 13, dans lequel la plaque de fermeture de sortie (4) ferme de manière étanche une ouverture à gauche (55) de l'élément tubulaire (5) de façon à permettre le passage de fluide de refroidissement depuis la chambre tubulaire (54) vers l'orifice de sortie de fluide de refroidissement (OUT) uniquement à travers le trou traversant (41).
